# EUROPÄISCHE PATENTSCHRIFT

(11) **EP 1 236 617 B1**
(45) Veröffentlichungstag und Bekanntmachung des Hinweises auf die Patenterteilung: **19.05.2004**
(21) Anmeldenummer: 02001365.2
(22) Anmeldetag: 19.01.2002
(51) Int. Cl.: B60R 11/02

(54) **Anzeigeeinheit für ein Kraftfahrzeug**
Display Unit for a Vehicle
Unité d'affichage pour un véhicule

(30) Priorität: 17.02.2001 DE 10107535
(43) Veröffentlichungstag der Anmeldung: 04.09.2002
(73) Patentinhaber: Dr.Ing. h.c.F. Porsche Aktiengesellschaft, 70435 Stuttgart (DE)
(72) Erfinder: Melcher, Wolfgang, 70597 Stuttgart (DE); Sprengart, Mathias, 75242 Neuhausen/Hamberg (DE)

(56) Entgegenhaltungen:
- EP-A- 0 675 019
- WO-A-01/00451
- DE-A- 4 213 129
- DE-A- 4 445 826
- DE-A- 19 951 968

## Beschreibung

Die Erfindung betrifft eine Anzeigeeinheit, die in der Armaturentafel eines Kraftfahrzeuges angeordnet ist, nach dem Oberbegriff des Anspruchs 1, siehe DE 44 45 826 A.

Aus der DE 41 28 663 A1 ist bereits eine Armaturentafel bekannt, die zur Anzeige von Informationen einen Bildschirm und zum Abrufen dieser Informationen sowie zur Eingabe von Daten ein Tastenfeld aufweist. Der Bildschirm ragt im normalen Fahrbetrieb nur zu etwa einem Drittel aus der Kontur der Armaturentafel heraus. Wird seine gesamte Displayfläche benötigt, dann fährt er motorisch vollständig aus der Armaturentafel heraus. Das Tastenfeld kann ebenfalls motorisch aus einer in der Armaturentafel versenkten Stellung in eine vorspringende Bedienstellung bewegt werden. Der bekannte Bildschirm wird zum Ausfahren seiner Position um eine rückwärtige Schwenkachse aus der Oberseite der Armaturentafel herausklappbar angeordnet. Zusätzlich ist der bekannte Bildschirm um eine senkrechte Achse schwenkbar, um von einer zum Fahrer hin gerichteten Position in eine zum Beifahrer hin gerichtete Position angeordnet zu werden.

Die Anzeigeeinheit mit den Merkmalen des Anspruchs 1 hat den Vorteil, daß sie in ihrer Ruheposition sich nahtlos in die Kontur des Armaturenbrettes einfügt und der harmonische Gesamteindruck des Armaturenbrettes nicht gestört wird. Desweiteren kann durch die zentrale mittige Anordnung die Anzeigeeinheit in Arbeitsposition sowohl vom Fahrer als auch vom Beifahrer ohne zusätzliche Schwenkung abgelesen werden.

Ausführungsbeispiele der Erfindung sind in der Zeichnung dargestellt und im Nachfolgenden näher erläutert.

Es zeigen
- Fig. 1: die Anordnung der Anzeigeeinheit auf dem Armaturenbrett in einem schematischen Überblick
- Fig. 2: einen Längsschnitt durch die Anzeigeeinheit in Arbeitsposition,
- Fig. 3: einen Querschnitt durch die Anzeigeeinheit in Arbeitsposition,
- Fig. 4: einen Querschnitt durch die Anzeigeeinheit um 45° aus der Arbeitsposition herausgeschwenkt und
- Fig. 5: einen Querschnitt durch die Anzeigeeinheit in Ruheposition.

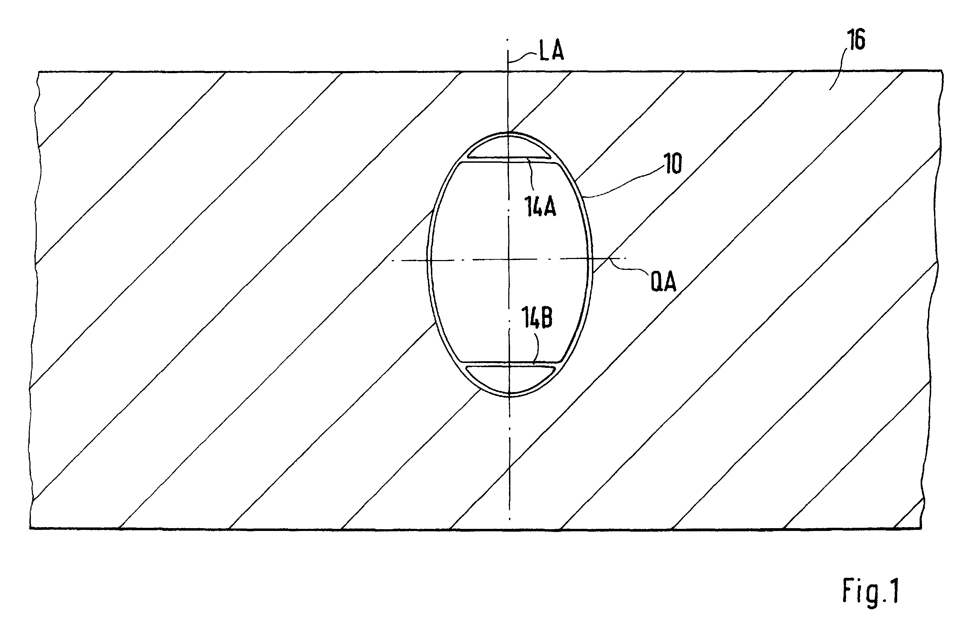

Figur 1 zeigt eine Anzeigeeinheit 10 in Ruheposition, wobei ein Armaturenbrett 16 nur schematisch als schraffierter Fläche angegeben ist. In das Armaturenbrett 16 ist die Anzeigeeinheit 10 eingebettet. Die Anzeigeeinheit 10 hat eine im wesentliche ovale Grundform und fügt sich in Ruheposition in die flächige Kontur des Armaturenbrettes 16 ein. In dieser Figur 1 sind die Längsachse LA und die Querachse QA eingezeichnet, die die Schnittachse für den Längs- und den Querschnitt der Darstellungen in den weiteren Figuren bilden.

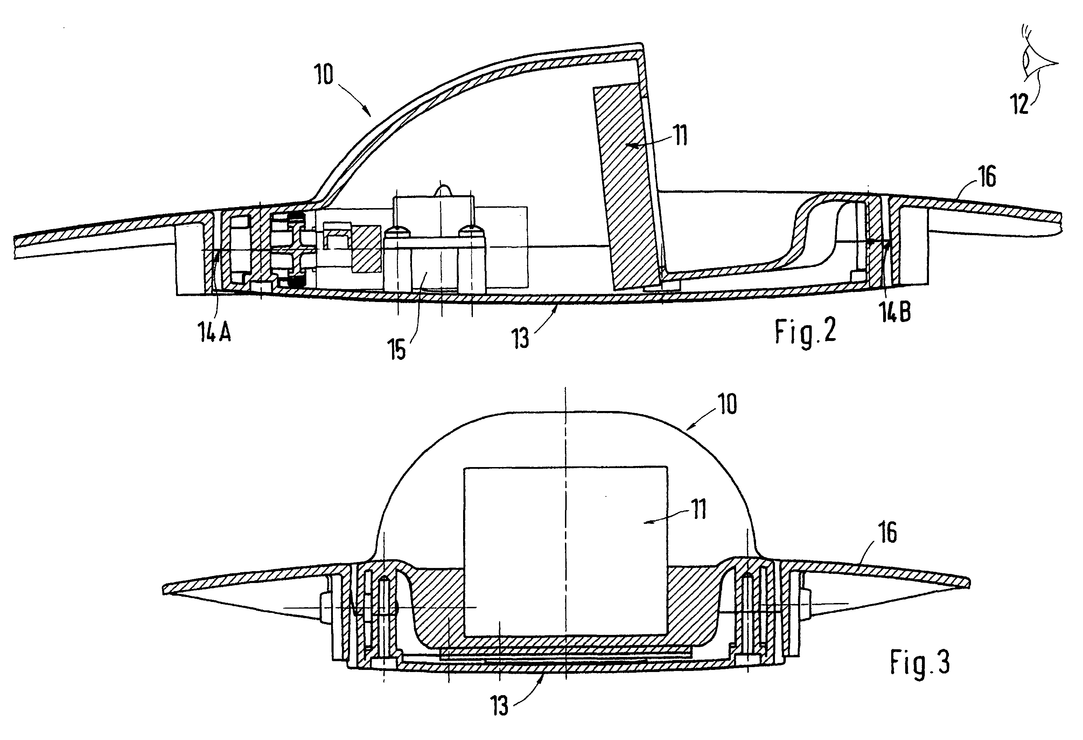

Fig. 2 zeigt die Anzeigeeinheit 10 in teilweise geschnittener Darstellung, wobei der Schnitt entlang der Längsachse LA verläuft. Die Anzeigeeinheit 10 befindet sich in Arbeitsposition, so daß das Display 11 von einem Betrachter 12, welcher nur symbolisch angegeben ist, abgelesen werden kann. In der Arbeitsposition ist die Rückseite 13 der Anzeigeeinheit 10 vom Betrachter abgewandt. Insgesamt ist die Anzeigeeinheit 10 an ihren längsseitigen Enden an den Punkten 14a und 14b drehbar gelagert, so daß das Schwenken um 180° von der Arbeitsposition in die Ruheposition und umgekehrt erfolgen kann. Im Inneren der Anzeigeeinheit kann beispielsweise ein Kompaß 15 angeordnet sein, so daß dann über eine entsprechende Erfassung die entsprechende Himmelsrichtung, in welche sich das Fahrzeug bewegt, im Kompaß angezeigt werden kann. Eine weitere Möglichkeit ist die Anzeige der Neigung des Fahrzeuges, was für Fahrten im Gelände durchaus von Bedeutung ist.

Fig. 3 zeigt einen Querschnitt durch die Anzeigeeinheit 10, wobei die Anzeigeeinheit 10 aus der vom Betrachter 12 ausgesehenen Richtung dargestellt ist. Mit dem Bezugszeichen 11 ist auch hier das Display zur Anzeige der verschiedenen Informationen bezeichnet. Die Rückseite 13 ist hier auf der dem Betrachter 12 abgewandten Seite der Anzeigeeinheit 10 im Armaturenbrett 16. Das Armaturenbrett ist in allen Figuren mit den Bezugszeichen 16 versehen.

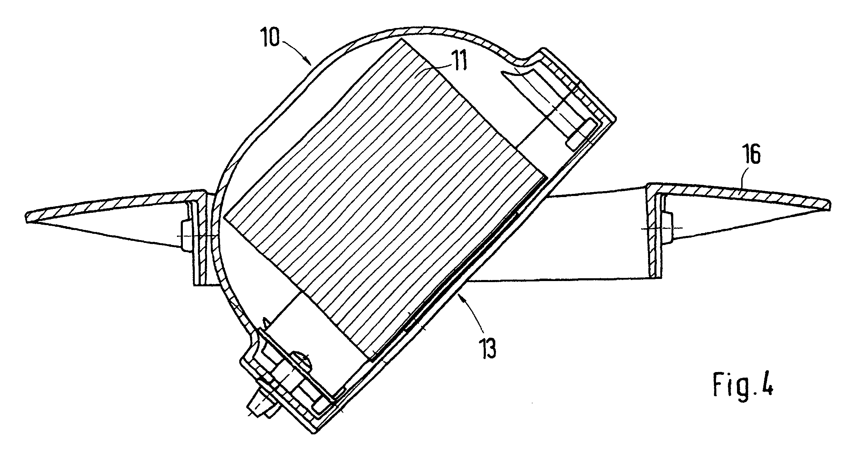

In Fig. 4 ist ein Querschnitt durch die Anzeigeeinheit 10 dargestellt, wobei die Anzeigeeinheit um 45° aus ihrer Arbeitsposition herausgeschwenkt ist. Hier ist deutlich zu erkennen, daß die Rückseite 13 der Anzeigeeinheit 10 eine Wölbung aufweist, die sich bei Ruheposition der Anzeigeeinheit 11 schlüssig in die Kontur des Armaturenbrettes einfügt.

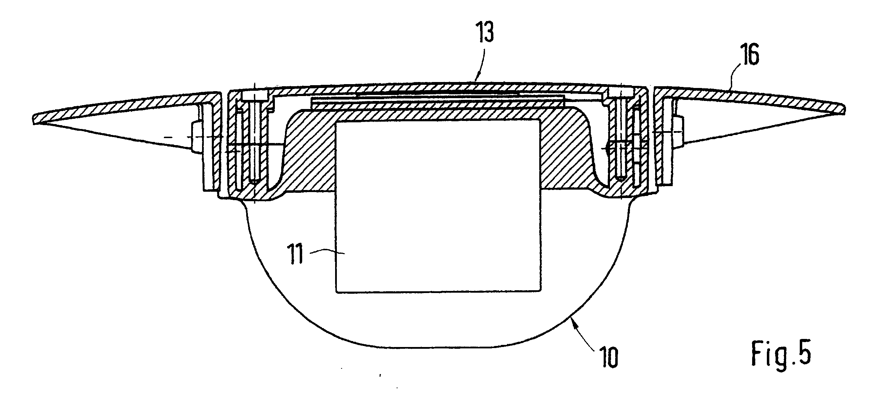

Fig. 5 zeigt die Anzeigeeinheit 10 in Ruheposition. Dieser Figur ist sehr gut zu entnehmen, daß die Rückseite der Anzeigeeinheit 10 sich in der Ruheposition harmonisch in die Wölbung des Armaturenbrettes 16 einfügt.

## Patentansprüche

1. Anzeigeeinheit für ein Kraftfahrzeug, welche im Armaturenbrett (16) angeordnet ist und zwischen einer Ruheposition und einer Arbeitsposition verschwenkbar angeordnet ist, **dadurch gekennzeichnet, dass** die Anzeigeeinheit (10) zur Inbetriebnahme entlang einer ihrer Achsen um 180° schwenkbar ist, dass die in Ruheposition sichtbare Rückseite (13) der Anzeigeeinheit (10) sich in die Kontur des Armaturenbrettes (16) einfügt und wobei die Schwenkbewegung von einer Hub- und anschließenden Absenkbewegung der Anzeigeeinheit begleitet ist.

2. Anzeigeeinheit nach Anspruch 1, **dadurch gekennzeichnet, dass** die Kontur eines Schnittes entlang der Längsachse (LA) der Anzeigeeinheit (10) in ihrer Arbeitsposition von der dem Fahrer abgewandten Seite bis zur Mitte der Längsachse (LA) ansteigt und dann ein Display (11) umfasst.

3. Anzeigeeinheit nach Anspruch 1, **dadurch gekennzeichnet, daß** das Display (11) in Arbeitsposition der Anzeigeeinheit im wesentlichen senkrecht zur Blickrichtung des Fahrers steht.

4. Anzeigeeinheit nach Anspruch 1, **dadurch gekennzeichnet, daß** die Anzeigeeinheit (10) an ihren längsseitigen Enden drehbar gelagert ist.

5. Anzeigeeinheit nach Anspruch 1, **dadurch gekennzeichnet, dass** die in Ruheposition sichtbare Rückseite (13) der Anzeigeeinheit (10) eine Wölbung aufweist, die sich harmonisch in die Wölbung des Armaturenbrettes einfügt.

## Claims

1. A display unit for a motor vehicle, which display unit is arranged in the dashboard (16) and is arranged so as to be pivotable between a rest position and an operational position, **characterized in that** for operation purposes the display unit (10) is pivotable by 180° along one of its axes, the rear side (13) of the display unit (10) visible in the rest position is inserted into the outline of the dashboard (16) and wherein the pivoting movement is accompanied by a lifting movement and subsequent lowering movement of the display unit.

2. A display unit according to Claim 1, **characterized in that** the outline of a section along the longitudinal axis (**LA**) of the display unit (10) in its operational position ascends from the side remote from the driver as far as the middle of the longitudinal axis (**LA**) and then surrounds a display (11).

3. A display unit according to Claim 1, **characterized in that** the display (11) in the operating position of the display unit is substantially at a right angle to the driver's direction of vision.

4. A display unit according to Claim 1, **characterized in that** the display unit (10) is mounted so as to be rotatable at the ends of its longitudinal sides.

5. A display unit according to Claim 1, **characterized in that** the rear side (13) of the display unit (10) visible in the rest position has a convex portion which fits smoothly into the convex portion of the dashboard.

## Revendications

1. Unité d'affichage pour un véhicule automobile, qui est disposée dans le tableau de bord (16) et peut pivoter entre une position de repos et une position de travail, **caractérisée en ce que** pour sa mise en service, l'unité d'affichage (10) peut pivoter de 180° le long de ses axes, **en ce que** la face arrière (13), visible en position de repos, de l'unité d'affichage (10), s'insère dans le contour du tableau de bord (16), et le mouvement de pivotement est accompagné par un mouvement de levage puis d'abaissement de l'unité d'affichage.

2. Unité d'affichage selon la revendication 1, **caractérisée en ce que** le contour d'une coupe le long de l'axe longitudinal (LA) de l'unité d'affichage (10) en position de travail, monte depuis le côté tourné à l'opposé du conducteur, jusqu'au milieu de l'axe longitudinal (LA) et entoure alors un écran (11).

3. Unité d'affichage selon la revendication 1, **caractérisée en ce que** l'écran (11) en position de travail de l'unité d'affichage est sensiblement perpendiculaire à la direction du regard du conducteur.

4. Unité d'affichage selon la revendication 1, **caractérisée en ce que** l'unité d'affichage (10) est supportée à ses deux extrémités côté longitudinal, de manière à pouvoir tourner.

5. Unité d'affichage selon la revendication 1, **caractérisée en ce que** la face arrière (13), visible en position de repos, de l'unité d'affichage (10), présente une courbure qui s'insère harmonieusement dans la courbure du tableau de bord.
